**Europäisches Patentamt**

**European Patent Office**

**Office européen des brevets**

(19)

(11) Veröffentlichungsnummer: **0 010 618**
**B1**

(12) **EUROPÄISCHE PATENTSCHRIFT**

(45) Veröffentlichungstag der Patentschrift:
05.05.82

(51) Int. Cl.³: **B 21 D 53/04**

(21) Anmeldenummer: **79103671.8**

(22) Anmeldetag: **27.09.79**

(54) **Verfahren zur Herstellung eines flachen Wärmetauschers aus Metallblech.**

(30) Priorität: **04.11.78 DE 2847897**

(43) Veröffentlichungstag der Anmeldung:
**14.05.80 Patentblatt 80/10**

(45) Bekanntmachung des Hinweises auf die Patenterteilung:
**05.05.82 Patentblatt 82/18**

(84) Benannte Vertragsstaaten:
**AT BE CH FR GB IT NL SE**

(56) Entgegenhaltungen:
**FR-A-675 259**
**FR-A-1 236 992**
**FR-A-2 093 496**
**GB-A-784 484**
**GB-A-857 291**
**GB-A-927 409**
**GB-A-952 064**
**US-A-3 044 164**
**US-A-3 196 531**

(73) Patentinhaber: **Kabel- und Metallwerke**
**Gutehoffnungshütte Aktiengesellschaft,**
**Kabelkamp 20 Postfach 260, D-3000 Hannover 1 (DE)**

(72) Erfinder: **Daniel, Willi, In den Bleeken 36,**
**D-4500 Osnabrück (DE)**

ACTORUM AG.

Verfahren zur Herstellung eines flachen Wärmetauschers aus Metallblech

Die Erfindung betrifft ein Verfahren zur Herstellung eines flachen Wärmetauschers aus Metallblech mit mindestens einem ein zu erwärmendes oder zu kühlendes Medium führenden Kanal, insbesondere einer Dachhaut zur gleichzeitigen Aufnahme von Umweltenergie, bei dem zunächst ein mit mindestens einer durch Bohren erzeugte Durchgangsöffnung versehener, vorzugsweise aus Kupfer bestehender Metallblock hergestellt, in jede Durchgangsöffnung ein Schweissstoppmittel eingebracht, der Metallblock in Richtung des Verlaufs der Durchgangsöffnung(en) bis auf das Endmass durch Walzen gestreckt und anschliessend jede flachgewalzte Durchgangsöffnung aufgebläht wird.

Durch die zunehmende Verknappung und Verteuerung von Primärenergie wie Erdöl, Kohle, Erdgas usw., gewinnt die Ausnutzung von Niedertemperaturwärme, wie Abwärme, Wärme aus der Umgebungsluft und der Globalstrahlung zunehmend an Bedeutung. Es sind bereits verschiedene Vorschläge gemacht worden, Dächer von Gebäuden zur Aufnahme dieser Energie zu verwenden.

So ist aus dem Deutschen Gebrauchsmuster 7 540 889 eine metallische Abdeckplatte für Dächer und Fassaden bekannt, welche eine Sicke zur Aufnahme eines einen Wärmeträger führenden Rohres aufweist und die über seitlich angebrachte Stege miteinander verbunden sind. Die Wärme tritt bei dieser Konstruktion durch die Wandung der Abdeckplatte im Bereich der Sicke und durch die Wandung des Rohres und gelangt dann in den Wärmeträger. Fertigungsbedingt verbleibt zwischen dem Rohr und der Sicke normalerweise ein geringer Luftspalt, der dem Wärmetransport einen Widerstand entgegensetzt. Aus Gründen der verbesserten Leitfähigkeit sind bei dieser Konstruktion sowohl die Abdeckplatte als auch das Rohr, vorzugsweise aus Kupfer, hergestellt.

Flachkollektoren bzw. Flachabsorber werden auch schon in der Weise hergestellt, dass man auf ein Metallband nach dem Muster des Kanalsystems ein Schweissstoppmittel aufbringt, auf das Metallband ein zweites Metallband auflegt und beide Metallbänder gemeinsam herunterwalzt. Dabei verschweissen die beiden Metallbänder miteinander an den Stellen, an denen kein Schweissstoppmittel vorhanden ist, während die Bereiche, in denen das Schweissstoppmittel einen metallischen Verbund verhindert, nach dem Walzplattieren aufgebläht werden. Der Nachteil dieses Verfahrens ist darin zu sehen, dass dieses verhältnismässig teuer und aufwendig und nicht für alle Metalle anwendbar ist. So ist insbesondere die Kaltverschweissung zweier Kupferbänder sehr problematisch (US-A-3 667 266).

Es ist auch bereits bekannt, flache Wärmetauscher aus Metallblech aus einem Metallblock herzustellen, in den man Bohrungen einbringt, in die Bohrungen ein Schweissstoppmittel einführt und den so vorbereiteten Metallblock in Richtung des Bohrungsverlaufs walzt. Nach dem Walzen werden dann die flachgewalzten Bohrungen aufgebläht (GB-A-784 484, GB-A-857 291).

Schwierigkeiten können bei diesem Verfahren dadurch auftreten, dass es nicht gelingt, in dem fertigen Wärmetauscherblech die Kanäle bezüglich ihrer Abmessung und ihres Abstandes zueinander gleichmässig zu halten, insbesondere, wenn der Metallblock eine grosse Länge aufweist. Aus diesem Grunde war dieses Verfahren nur für kurze Metallblöcke geeignet und das Verfahren deshalb insofern unwirtschaftlich.

Der vorliegenden Erfindung liegt die Aufgabe zugrunde, ein Verfahren anzugeben, mit dem es in besonders wirtschaftlicher und einfacher Weise möglich ist, flache Wärmetauscher in Blechform herzustellen, die Kanäle aufweisen zum Führen eines zu kühlenden oder zu erwärmenden Mediums. Insbesondere soll es auch möglich sein, flache Wärmetauscher aus Kupfer oder Kupferlegierungen herzustellen. Darüber hinaus soll das Blech hinsichtlich seiner Festigkeitseigenschaften so ausgebildet sein, dass auf der einen Seite Verformungen des Bleches möglich sind, auf der anderen Seite die Festigkeit genügend hoch ist, dass das Blech bei einem Einsatz als Dach Schneelasten zu tragen vermag und Begehungen durch z.B. Schornsteinfeger zulässt.

Diese Aufgabe wird bei einem Verfahren der eingangs erwähnten Art durch die Kombination folgender Merkmale gelöst;

a) die Durchgangsöffnungen werden in den Metallblock von beiden Stirnseiten aus durch Tieflochbohren erzeugt,

b) das Metallblech wird vor dem letzten Walzstich, welcher wie an sich bekannt durch Kaltwalzen erfolgt, im Durchlauf weichgeglüht und im selben Arbeitsgang wie das Glühen der letzte Walzstich aufgebracht.

Der wesentliche Vorteil des erfindungsgemässen Verfahrens ist darin zu sehen, dass auf herkömmlichen Bandwalzwerken Wärmetauscherbleche in grosser Länge hergestellt werden können. Darüber hinaus besteht der Wärmetauscher aus einem homogenen Material, was aus korrosionstechnischer Sicht vorteilhaft ist. Eine besondere Temperaturführung, wie sie insbesondere beim Walzplattieren notwendig ist, ist bei dem erfindungsgemässen Verfahren nicht notwendig. Als Ausgangsmaterial wird ein bereits mit Bohrungen versehener Metallblock verwendet, vorzugsweise ein stranggegossener Metallblock, in den eine oder mehrere in Längsrichtung des Metallblockes verlaufende Bohrungen durch Tieflochbohren von beiden Seiten eingebracht werden. Der Vorteil dieser Vorgehensweise ist darin zu sehen, dass die Bohrungen sehr eng toleriert eingebracht werden können und eine glatte Oberfläche aufweisen. Der mit Bohrungen versehene Metallblock besteht zweckmässigerweise aus Kupfer und wird zunächst warmgewalzt, darauf wird die Guss- bzw. Walzhaut spanend entfernt und anschliessend das spanend bearbeitete Band auf das Endmass kaltgewalzt. Diese Vorgehensweise zeichnet sich durch eine besonders hohe Wirtschaftlichkeit aus und führt zu einem Endprodukt mit metallisch blanker Oberfläche. Dadurch, dass das Band vor dem letzten Kaltwalzstich in kontinuierlichem Durchlauf weichgeglüht und abschliessend ein Kaltwalzstich aufgebracht wird, erhält man ein Band in halbhartem Zustand, welches sich gut weiterverarbeiten lässt und dennoch eine ausreichend hohe Festigkeit aufweist.

Das Halbzeug für den Wärmetauscher ist in nahezu beliebigen Längen herstellbar. So ist es möglich, das kaltgewalzte Kupferband im selben Arbeitsgang wie das Kaltwalzen in Verbrauchslängen zu schneiden und anschliessend jede Bohrung aufzublähen. Andererseits kann es aber auch vorteilhaft sein, nach dem Kaltwalzen jede Bohrung des Kupferbleches aufzublähen und das Kupferblech aufzutrommeln. Das Auftrommeln ist möglich, ohne dass die Bohrung bzw. die Bohrungen sich in unzulässiger Weise verformen. An der Montagestelle kann dann die benötigte Länge von der Trommel abgezogen und abgetrennt werden.

Die nach dem erfindungsgemässen Verfahren hergestellten Wärmetauscher zeigen aus verfahrenstechnischen Gründen im Bereich der Bohrungen eine gegenüber dem übrigen Bandmaterial geringere Wanddicke. Dies kann in manchen Anwendungsfällen nachteilig sein, und es hat sich aus diesem Grunde als zweckmässig erwiesen, die jeweils neben den Bohrungsbereichen bzw. zwischen diesen gelegenen Blechbereiche nach dem letzten Walzstich in einem gesonderten Kaltwalzstich in ihrer Wanddicke zu reduzieren, vorzugsweise durch Walzen, quer zur Richtung der Bohrungen. Die Wanddickenabnahme sollte mindestens 25%, vorzugsweise 50%, betragen.

Als Schweissstoppmittel, die ein metallisches Verbinden der Bohrungsinnenwandung beim anschliessenden Walzen verhindern sollen, eignen sich beispielsweise Öl, Talkum, Quarz, Kalk, Graphit, Molybdändisulfid, Glyzerin und andere Stoffe, wobei auch Gemische Verwendung finden können. Das abschliessende Aufblähen der plattgewalzten Bohrungen bereitet keine grösseren Schwierigkeiten, wobei durch unterschiedlich hohen Druck beim Aufblähen unterschiedliche Kanalquerschnitte möglich sind. So wird sich bei höherem Druck ein kreisrunder Querschnitt des Kanals einstellen, während bei geringeren Drücken ovale Querschnitte erzielbar sind.

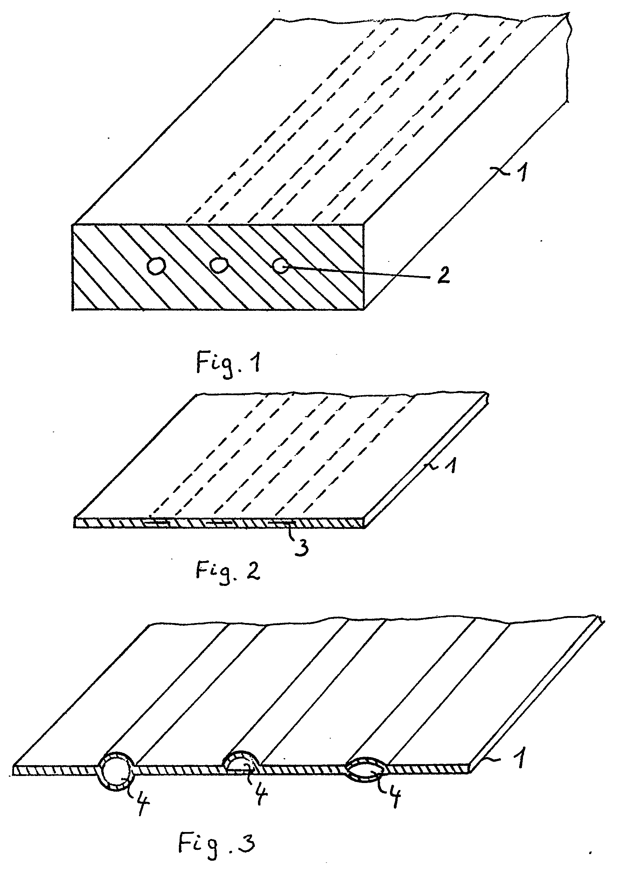

Die Erfindung ist anhand des in den Figuren 1 bis 3 schematisch dargestellten Ausführungsbeispiels näher erläutert.

In der Figur 1 ist mit 1 ein Metallblock bezeichnet, vorzugsweise aus Kupfer oder einer Kupferlegierung, der beispielsweise durch Stranggiessen hergestellt wurde. Der Metallblock 1 weist in Längsrichtung verlaufende Kanäle 2 auf, die nachträglich in den Metallblock 1 eingebracht wurden. Die Kanäle 2 werden durch spanende Bearbeitung durch Tiefbohren erzeugt. Der Metallblock 1 hat beispielsweise eine Breite von 710 mm, eine Höhe von 210 mm und eine Länge von 5 000 mm. Mittels Tiefbohrwerken werden die Kanäle 2 stirnseitig von beiden Seiten in den Metallblock 1 eingebracht.

In die Kanäle 2 wird dann ein Schweissstoppmittel, beispielsweise Talkum, Quarz, Kalk, Molybdändisulfid, Graphitpulver, Glyzerin bzw. auch Gemische davon eingeführt, und zwar in einer solchen Menge, dass die Innenwandung der Kanäle 2 vollständig beschichtet sind. Das Schweissstoppmittel soll verhindern, dass beim anschliessenden Warmwalzvorgang eine Verschweissung der Innenwandung der Kanäle 2 stattfindet. Beim Warmwalzvorgang wird die Höhe des Metallblockes 1 von 210 mm auf ca. 12 mm heruntergewalzt, wobei eine Längung des Metallblockes 1 auftritt. Die Kanäle 2, deren Durchmesser beispielsweise 25 mm beträgt, werden dabei zu Schlitzen 3 verformt (s. Fig. 2). Im Anschluss an das Warmwalzen, welches beim Verwalzen eines Kupferblockes, vorzugsweise bei 700°C vorgenommen wird, wird der warmgewalzte Metallblock 1 allseitig gefräst und dabei die Guss- bzw. die Walzhaut entfernt. Der so vorbereitete Metallblock 1 wird dann in mehreren Kaltwalzstichen auf das Endmass heruntergewalzt. Die Wanddicke des fertigen Flachwärmetauschers sollte dabei 1 mm nicht überschreiten.

Unmittelbar vor dem letzten Kaltwalzstich wird das Metallblech in kontinuierlichem Durchlauf geglüht und im selben Arbeitsgang der letzte Walztisch aufgebracht. Man erhält somit ein Metallblech in halbharter Qualität.

Die Schlitze 3 werden sodann an einem Ende aufgedornt und am anderen Ende verschlossen und am aufgedornten Bereich ein Druckmittel, beispielsweise Pressluft, eingebracht, welches bei genügend hohem Druck ein Aufblähen der Schlitze 3 zu Kanälen 4 bewirkt. Der Querschnitt der Kanäle 4 kann je nach Höhe des Druckes kreisrund oder aber auch oval sein. Durch Einspannen vor dem Aufblähen kann auch ein halbkreisförmiger Querschnitt des Kanals 4 erzeugt werden. Das Aufblähen der Schlitze 3 kann sowohl bei auf Länge geschnittenen Metallblechen als auch für die gesamte Metallbahn im unabgelängten Zustand vorgenommen werden.

**Patentansprüche**

1. Verfahren zur Herstellung eines flachen Wärmetauschers aus Metallblech mit mindestens einem ein zu erwärmendes oder zu kühlendes Medium führenden Kanal, insbesondere einer Dachhaut zur Aufnahme von Umweltenergie, bei dem zunächst ein mit mindestens einer durch Bohren erzeugte Durchgangsöffnung versehener, vorzugsweise aus Kupfer bestehender Metallblock hergestellt, in jede Durchgangsöffnung ein Schweissstoppmittel eingebracht, der Metallblock in Richtung des Verlaufs der Durchgangsöffnun(en) bis auf das Endmass durch Walzen gestreckt, und anschliessend jede flachgewalzte Durchgangsöffnung aufgebläht wird, gekennzeichnet durch die Kombination folgender Merkmale:

a) die Durchgangsöffnungen werden in den Metallblock von beiden Stirnseiten aus durch Tieflochbohren erzeugt,

b) das Metallblech wird vor dem letzten Walzstich, welcher wie an sich bekannt durch Kaltwalzen erfolgt, im Durchlauf weichgeglüht und im selben Arbeitsgang wie das Glühen der letzte Walzstich aufgebracht.

2. Verfahren nach Anspruch 1, dadurch gekennzeichnet, dass das kaltgewalzte Band im selben Arbeitsgang wie das Kaltwalzen in Verbrauchslängen geschnitten, und anschliessend jede Durchgangsöffnung aufgebläht wird.

3. Verfahren nach Anspruch 1, dadurch gekennzeichnet, dass nach dem Aufblähen jeder Durchgangsöffnung des Bandes das Band aufgetrommelt wird.

## Claims

1. Process for the manufacture of a flat heat exchanger made from sheet metal and having at least one channel through which a medium which is to heated or cooled passes, in particular a roof skin for absorption of energy from the environment, in which process a metal block, preferably consisting of copper, and having at least one passage produced by drilling is first manufactured, a welding preventative is introduced into each passage, the metal block is stretched in the direction of the path of the passage(s), by rolling, to the final dimension, and thereafter each passage which has been rolled flat is inflated, characterised by the combination of the following features:

a) the passages are produced in the metal block by drilling a deep hole from both end faces, and

b) the metal sheet is soft-annealed in a tunneltype annealing furnace, prior to the last reduction stage, which is effected by coldrolling in a manner known per se, and the last reduction stage is effected in the same pass as the annealing.

2. Process according to claim 1, characterised in that the cold-rolled strip is cut into use lengths in the same pass as the cold-rolling, and that subsequently each passage is inflated.

3. Process according to claim 1, characterised in that after inflation of each passage of the strip, the strip is reeled up.

## Revendications

1. Procédé pour la fabrication d'un échangeur de chaleur plat en tôle métallique comprenant au moins un canal conducteur d'un fluide à réchauffer ou à refroidir, notamment un revêtement de toit pour la captation simultanée d'énergie d'environnement, procédé par lequel on fabrique tout d'abord un bloc de métal, constitué notamment en cuivre, pourvu par perçage d'au moins une ouverture de traversée, on introduit dans chaque ouverture un produit s'opposant au soudage des surfaces, on étire le bloc de métal, par laminage en direction de l'orientation des ouvertures de traversée, jusqu'à sa dimension finale, et ensuite on élargit, par soufflage, chacune des ouvertures de traversée qui a été aplatie par le laminage, procédé caractérisé en ce que les ouvertures de traversée sont réalisées dans le bloc de métal, à partir de chaque côte, par des perçages profonds, et la tôle métallique est réchauffée jusqu'à ramollissement dans son passage avant le dernier banc de laminage, qui agit de manière connue par laminage à froid, et elle est amenée à ce dernier banc de laminage dans la même opération de travail que son réchauffage de ramollissement.

2. Procédé suivant la revendication 1, caractérisé en ce que la bande de métal laminée à froid est, dans la même opération de travail que son laminage à froid, découpée suivant les longueurs d'emploi, après quoi chacune des ouvertures de traversée est élargie par soufflage.

3. Procédé suivant la revendication 1, caractérisé en ce que, après l'elargissement par soufflage de chacune des ouvertures des traversée de la bande, celle-ci est enroulée sur un tambour pour son stockage.

Fig. 1

Fig. 2

Fig. 3